# EUROPÄISCHE PATENTSCHRIFT

(11) **EP 1 040 487 B1**
(45) Veröffentlichungstag und Bekanntmachung des Hinweises auf die Patenterteilung: **26.09.2001**
(21) Anmeldenummer: 98966779.5
(22) Anmeldetag: 17.12.1998
(51) Int. Cl.: G11C 16/06, G07F 7/10

(54) **VERFAHREN ZUM SICHEREN ÄNDERN EINES IN EINEM NICHT-FLÜCHTIGEN SPEICHER GESPEICHERTEN WERTES UND SCHALTUNGSANORDNUNG HIERZU**
METHOD FOR RELIABLY CHANGING A VALUE STORED IN A NONVOLATILE STORAGE AND CIRCUIT FOR SAID METHOD
PROCEDE POUR LA MODIFICATION SECURISEE D'UNE VALEUR MEMORISEE DANS UNE MEMOIRE REMANENTE ET CIRCUIT A CET EFFET

(30) Priorität: 19.12.1997 DE 19756895
(43) Veröffentlichungstag der Anmeldung: 04.10.2000
(73) Patentinhaber: Infineon Technologies AG, 81669 München (DE)
(72) Erfinder: POCKRANDT, Wolfgang, D-85293 Reichertshausen (DE)
(74) Vertreter: Zedlitz, Peter, Dipl.-Inf.
(86) Internationale Anmeldenummer: DE9803715
(87) Internationale Veröffentlichungsnummer: WO9933059

(56) Entgegenhaltungen:
- EP-A- 0 398 545
- EP-A- 0 448 118

## Beschreibung

Es sind derzeit vielfältige Anwendungen in Gebrauch, bei denen Werte, die beispielsweise durch einen Zählerstand repräsentiert sind, nicht-flüchtig festgehalten werden. Die Speicherung erfolgt vorzugsweise in Festwertspeichern wie EPROMs, EEPROMs und Flash-EPROMs, d.h. in Speichern, die gelöscht und wieder beschrieben werden können. Die Speicher und die den Wert ermittelnden Schaltungen sowie den Wertermittlungs- und Speicherablauf steuernden Schaltungen sind zumeist in integrierten Schaltungen realisiert. Die integrierten Schaltungen bzw. der sie beinhaltende Halbleiterchip sind zur besseren Handhabung derzeit meistens in kartenförmigen Datenträgern eingebettet. Der Wert stellt in den meisten Fällen ein monetäres Guthaben dar, das beispielsweise bei Telefonkarten nur verringert, bei Geldkarten aber auch wieder erhöht werden kann. Der Wert kann aber auch beispielsweise der Stand eines Kilometerzählers in einem Fahrzeug sein.

Die DE 36 38 505 A1 beschreibt einen Wertzähler, der als flüchtiger Binärzähler ausgebildet ist, dessen Zählerstand nach Benutzung des Datenträgers nicht-flüchtig in einem EEPROM gespeichert wird. Bei Beginn einer Nutzung des Datenträgers wird der Inhalt des EEPROMs wieder in den Binärzähler als Anfangszählerstand übertragen. Der Zähler kann nur in der Richtung betrieben werden, in der der durch den Zählerstand repräsentierte Wert verringert wird. Da der Wert des Datenträgers somit nicht erhöht werden kann, ist nur ein geringer Manipulationsanreiz für Betrüger gegeben.

Ein in der WO 96/10810 beschriebener Datenträger soll wieder aufgeladen werden können, sein Wert also auch erhöht werden können. Der dortige Zähler ist mit EEPROM-Speicherzellen gebildet, und derart organisiert, daß er als mehrstufiger Zähler nach dem Abakusprinzip arbeitet. Um eine Manipulation bei einer Änderung des Zählerstandes auszuschließen, sind zwei identisch aufgebaute Zähler vorgesehen, die bei jeder Erhöhung des Zählerstandes abwechselnd benutzt werden. Diese Zähleraufbau ist zwar sehr sicher, erfordert jedoch eine relativ hohe Anzahl an Speicherzellen und hat damit einen hohen Flächenbedarf.

Aus der EP 0 398 545 A1 ist ein Kilometerzähler bekannt, der ebenfalls mit einem binären Zähler gebildet ist, dessen Zählerstand in regelmäßigen Abständen nicht-flüchtig in Speicherzellen gespeichert wird. Da nicht-flüchtige Speicherzellen insbesondere EEPROM-Zellen nicht beliebig oft gelöscht und neu beschrieben werden können sind eine Anzahl identischer Speicherbereiche vorgesehen, die nacheinander, jeweils nach Ablauf der "Lebensdauer" des vorherigen Speicherbereichs, in Gebrauch sind. Um den jeweils aktuellen Speicherbereich zu kennzeichnen sind Kontrollspeicherzellen vorgesehen, deren Zustand ausgewertet wird.

Bei dem bekannten Zähler wird bei einem Speicherbereichswechsel zunächst der neue Speicherbereich gelöscht. Dann wird der aktuelle Zählerstand in diesen eingetragen. Anschließend wird die zugehörige Kontrollspeicherzelle programmiert. Abschließend wird die Kontrollspeicherzelle des alten Speicherbereichs gelöscht. Es sind bei einem Speicherbereichswechsel insgesamt vier Lösch- und Programmiervorgänge durchzuführen, was eine erhebliche Zeit benötigt. Dies ist bei einem Kilometerzähler, bei dem erst nach beispielsweise 20.000 km ein Speicherwechsel nötig ist, nicht weiter problematisch.

Bei Telefonwertkarten, bei denen für jede verbrauchte Einheit ein Zählerstandwechsel und damit ein Speicherbereichswechsel stattfinden muß, ist dies jedoch nicht akzeptabel.

Die Aufgabe vorliegender Erfindung ist es daher, ein Verfahren zum sicheren Ändern eines in einem Speicher gespeicherten Wertes sowie eine integrierte Schaltungsanordnung hierzu anzugeben, die einerseits mit einer geringen Anzahl von nicht-flüchtigen Speicherzellen auskommt und andererseits einen schnellen Speicherbereichswechsel erlaubt.

Die Aufgabe wird mit einem Verfahren gemäß Anspruch 1 und einer Schaltungsanordnung gemäß Anspruch 2 gelöst.

Gemäß der Erfindung wird ein aktueller Wert, vorzugsweise der Zählerstand eines Binärzählers, in einem hierfür vorgesehenen Speicherbereich nicht-flüchtig programmiert. Diesem Speicherbereich ist zumindest eine Kontrollspeicherzelle zugeordnet, deren Ladezustand diesen Speicherbereich als den momentan inaktiven bzw. ungültigen ausweist. In einem weiteren Speicherbereich ist der zuvor gültige Wert, also der vorherige Zählerstand gespeichert, wobei die zugehörigen Kontrollspeicherzelle diesen Speicherbereich als den gültigen ausweist.

Nach dem Beschreiben des (noch) ungültigen Speicherbereichs mit dem aktuellen Wert bzw. Zählerstand wird der (noch) gültige Speicherbereich gelöscht und in erfindungsgemäßer Weise gleichzeitig der Ladezustand der zugehörigen Kontrollspeicherzelle geändert, beispielsweise gelöscht, so daß dieser Speicherbereich nun als der ungültige angezeigt wird. Ebenfalls gleichzeitig wird auch der Ladezustand der Kontrollspeicherzelle des gerade beschriebenen Speicherbereichs geändert, beispielsweise programmiert, so daß dieser Speicherbereich als der nunmehr gültige ausgewiesen wird.

Beim erfindungsgemäßen Verfahren sind also pro Speicherbereichwechsel nur zwei Lösch- und Programmiervorgänge erforderlich. Bevor der neu beschriebene Speicherbereich als gültig ausgezeichnet wird kann in bekannter Weise die Richtigkeit des eingeschriebenen Wertes überprüft werden, um Manipulationen zu verhindern. Die Speicherbereiche umfassen in vorteilhafter Weise genauso viele Zellen wie der Wert Stellen bzw. der den Wert repräsentierende Zähler Zählstellen hat.

Bei einer bevorzugten Schaltungsanordnung, die eine Durchführung des Verfahrens ermöglicht, sind zu jedem Kontrollspeicherzellen-Speichertransistor zwei Auswahltransitoren in Serie geschaltet, die den Source- und den Drainanschluß des Speichertransistors mit Masse bzw. einer mit einer Programmierspannung beaufschlagbaren Bitleitung verbinden. Die Gateanschlüsse der Auswahltransistoren sind so miteinander verschaltet, daß der eine Speichertransistor gelöscht wird, wenn der andere programmiert wird. Außerdem sind die Steuergates der Speichertransistoren der Kontrollspeicherzellen mit den Steuergates der Speichertransistoren der zugehörigen Speicherbereiche derart verbunden, daß ein Löschen eines Speicherbereichs auch das Löschen der zugehörigen Kontrollspeicherzelle zur Folge hat.

Die Erfindung wird nachfolgend anhand eines Ausführungsbeispiels mit Hilfe von Figuren näher erläutert. Dabei zeigen
- Figur 1: einen Ausschnitt aus einem nicht-flüchtigen Speicher mit zwei erfindungsgemäßen Speicherbereichen und
- Figur 2: eine Tabelle mit den Spannungswerten die zum Löschen bzw. Programmieren der Speicherbereiche erforderlich sind.

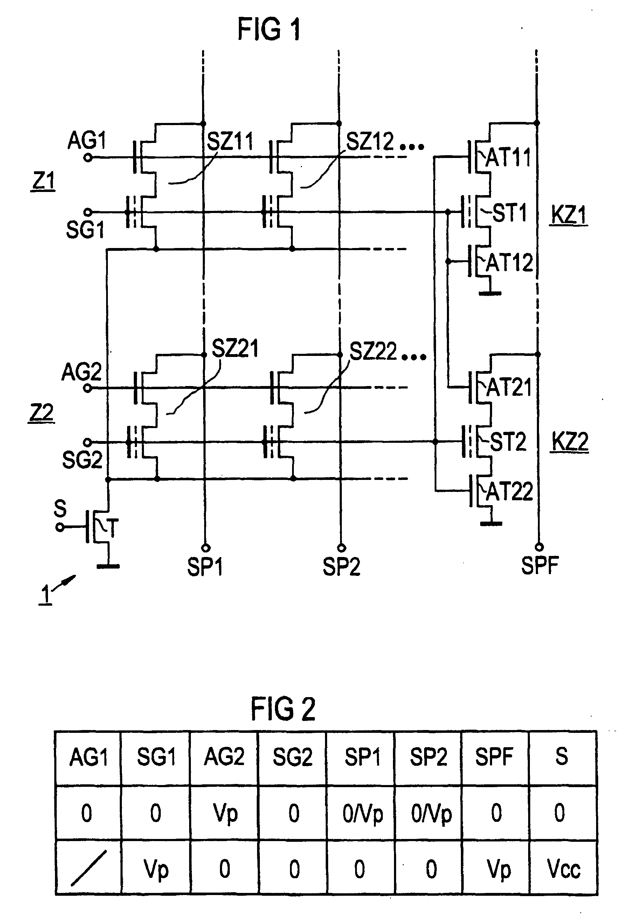

Figur 1 zeigt einen Ausschnitt aus einem EEPROM-Speicher mit zwei Speicherbereichen Z1, Z2. Der Speicher ist in üblicher Weise in Spalten und Zeilen organisiert, wobei im dargestellten Beispiel lediglich zwei Spalten und zwei Zeilen dargestellt sind.

Jede Speicherzelle SZ11...SZ22 ist hier mit einem Speichertransistor mit einer isolierten Speicherelektrode und einem dazu in Serie geschalteten Auswahltransistor gebildet. Die Sourceanschlüsse der Speichertransistoren können über einen Schalttransistor T mit Masse verbunden werden. Der Schalttransistor T weist hierzu einen Steueranschluß S auf.

Die Speicherzellen SZ11, SZ12; SZ21, SZ22 eines Speicherbereichs Z1; Z2 sind jeweils in einer Zeile des Speichers angeordnet, so daß sie alle gleichzeitig durch Adressierung nur einer Zeile gelöscht, programmiert oder gelesen werden können. Die Drainanschlüsse der Auswahltransistoren der Speicherzellen SZ11...SZ22 sind mit Bitleitungen verbunden, die zu Bitleitungsanschlüssen SP1, SP2 führen. An den Bitleitungsanschlüssen SP1, SP2 kann entweder der gespeicherte Zustand abgegriffen werden oder die zum Löschen/Programmieren nötigen Spannungen angelegt werden.

In folgendem sollen die Programmier-, Lösch und Leseabläufe für solche EEPROM-Zellen am Beispiel der Speicherzelle SZ11 des ersten Speicherbereichs Z1 erläutert werden:

Beim Programmieren wird die isolierte Speicherelektrode (floating gate) des Speichertransistors positiv geladen. Hierzu wird der Steuergateanschluß SG1 des Speichertransistors auf Masse gelegt und am zugehörigen Bitleitungsanschluß SP1 eine hohe Programmierspannung von etwa 20 Volt angelegt. Der Sourceanschluß des Speichertransistors wird auf schwebendem Potential gelassen indem der Schalttransistor T sperrend geschaltet wird. Um die hohe Programmierspannung über den Auswahltransistor der Speicherzelle SZ11 zum Drainanschluß des Speichertransistors schalten zu können, muß auch am Gateanschluß des Auswahltransistors die hohe Programmierspannung anliegen. Durch die positive Ladung auf der isolierten Gateelektrode wird die Einsatzspannung des Speichertransistors zu negativen Werten verschoben, so daß er bereits bei unbeschaltetem Steuergateanschluß SG1 leitet.

Um die Speicherzelle wieder zu löschen, wird an den Steuergateanschluß SG1 des Speichertransistors die hohe Programmierspannung Vp angelegt und dessen Sourceanschluß über den Schalttransistor T auf Masse gelegt. Auf diese Weise wird die isolierte Gateelektrode des Speichertransistors wieder entladen, wodurch die Einzelspannung des Speichertransistors steigt, so daß er bei unbeschaltetem Steuergateanschluß SG1 sperrt.

Zum Lesen des Ladezustands der Speicherzelle SZ11 wird an den Gateanschluß AG1 des Auswahltransistors die positive Versorgungsspannung Vcc der integrierten Schaltung, in der der Speicher realisiert ist, angelegt, so daß dieser leitet und dadurch die Speicherzelle ausgewählt ist. Abhängig davon ob der Speichertransistor programmiert ist oder nicht wird er leiten oder eben nicht. Dies kann am Bitleitungsanschluß SP1 detektiert werden.

Gemäß Figur 1 ist jedem Speicherbereich Z1; Z2 eine Kontrollspeicherzelle KZ1; KZ2 zugeordnet. Jede Kontrollspeicherzelle ist mit einem ersten Auswahltransistor AT11; AT21, einem Speichertransistor ST1; ST2 und einem zweiten Auswahltransistor AT12, AT22 gebildet, die in Serie geschaltet sind. Der Sourceanschluß der zweiten Auswahltransistoren AT12, AT22 ist mit Masse verbunden. Der Drainanschluß der ersten Auswahltransistoren AT11, AT21 ist über eine Kontrollbitleitung mit einem Kontrollbitleitungsanschluß SPF verbunden.

Die Steuergateanschlüsse der Speichertransistoren ST1, ST2 der Kontrollspeicherzellen KZ1, KZ2 sind mit den Steuergateanschlüssen SG1, SG2, der Speichertransistoren der Speicherbereiche Z1, Z2 verbunden. Die Gateanschlüsse des ersten Auswahltransistors AT11 der ersten Kontrollspeicherzelle KZ1 und des zweiten Auswahltransistors AT22 der zweiten Kontrollspeicherzelle KZ2 sind mit dem Steuergateanschluß des Speichertransistors ST2 der zweiten Kontrollspeicherzelle KZ2 verbunden, während die Gateanschlüsse des zweiten Auswahltransistors AT12 der ersten Kontrollspeicherzelle AZ1 und des ersten Auswahltransistors AT21 der zweiten Kontrollspeicherzelle KZ2 mit dem Steuergateanschluß des Speichertransistors ST1 der ersten Kontrollspeicherzelle KZ1 verbunden sind.

Durch diese Be- bzw. Verschaltung der Kontrollspeicherzellen untereinander und mit den Speicherbereichen wird erzielt, daß beim Löschen eines Speicherbereichs Z1 bzw. Z2 gleichzeitig die zugehörige Kontrollspeicherzelle KZ1 bzw. KZ2 gelöscht und die jeweils andere Kontrollspeicherzelle KZ2 bzw. KZ1 programmiert wird. Hierzu muß am Kontrollbitleitungsanschluß SPF ein hohes positives Potential Vp anliegen.

Figur 2 zeigt eine Tabelle, in der die Spannungen eingetragen sind, die für die Lösch- bzw. Programmiervorgänge an die maßgeblichen Anschlüsse AG1, SG1, AG2, SG2, SP1, SP2, SPF, S anzulegen sind. Im oberen Teil der Tabelle sind dabei die Spannungen für einen Schreibvorgang in zweiten Speicherbereich Z2 eingetragen. Der Eintrag 0/Vp bedeutet hierbei, daß abhängig davon, ob eine logische 0 oder eine logische 1 geschrieben werden soll entweder Massepotential oder die positive Programmierspannung an den jeweiligen Bitleitungsanschluß angelegt werden soll. Das fehlen eines Eintrags über die Spannung des Gateanschluß AG1 der Auswahltransistoren des ersten Speicherbereichs Z1 im Fall des Löschens des ersten Speicherbereichs Z1 bedeutet, daß der Wert dieser Spannung für den Löschvorgang nicht von Bedeutung ist.

Die Tabelle in Figur 2 zeigt den Fall, daß zuerst der zweite Speicherbereich Z2 mit einem aktuellen Wert beschrieben wird und anschließend der erste Speicherbereich Z1 gelöscht und die zugehörigen Kontrollspeicherzellen KZ1, KZ2 programmiert bzw. gelöscht werden. Für die Speicherung des nächsten Wertes wird entsprechend zuerst der erste Speicherbereich Z1 beschrieben und dann der zweite Speicherbereich Z2 gelöscht und die Kontrollspeicherzellen KZ2, KZ1 wieder umgeladen und sofort. Hierdurch wird immer zuerst der neue Zählerstand geschrieben während der alte Zählerstand noch erhalten bleibt und erst nach erfolgreichem Schreiben gelöscht wird, so daß ein Fehlerrisiko minimiert ist.

Die Erfindung wurde anhand eines EEPROM-Speichers mit herkömmlichen Speicherzellen, die mit einem Speicher und einem Auswahltransistor aufgebaut sind, erläutert. Die Erfindung läßt sich jedoch ohne weiteres auch auf beispielsweise Flash-EPROM-Speicherzellen anwenden, deren Speicherzellen aus nur einem Transistor bestehen. Auf eine Darstellung und Erläuterung der Zuschaltung von Spannungen an die Anschlüsse des Speichers sowie die Verbindung der Ausgänge eines Zählers mit den Eingängen des Speichers wurde verzichtet, da dies dem Fachmann absolut geläufig ist. Der gesamte Ablauf wird durch eine Steuereinrichtung, die entweder als spezielle Schaltung fest verdrahtet vorzugsweise auf derselben integrierten Schaltung vorliegt oder auch durch einen Mikroprozessor gebildet ist, gesteuert. Die Verbindung der Steuereinrichtung mit einem Zähler und der erfindungsgemäßen Schaltungsanordnung sowie die Ansteuerung dieser Elemente nach dem erfindungsgemäßen Verfahren ist dem Fachmann geläufig.

## Patentansprüche

1. Verfahren zum sicheren Ändern des Wertes eines Datenträgers mit zumindest zwei nicht-flüchtigen Speicherbereichen (Z1, Z2) zum Speichern des jeweils gültiger Wertes, wobei jedem Speicherbereich (Z1, Z2) zumindest eine nicht-flüchtige Kontrollspeicherzelle (KZ1, KZ2) zugeordnet ist, durch deren Zustand der jeweils gültige Speicherbereich (Z1; Z2) definiert ist, mit folgenden Schritten gekennzeichnet:
• der nicht-gültige Speicherbereich (Z2; Z1) wird mit dem aktuellen Wert beschrieben,
• der zuvor gültige Speicherbereich (Z1; Z2) und die zugehörige Kontrollspeicherzelle (KZ1; KZ2) werden gleichzeitig gelöscht und ebenfalls gleichzeitig wird die Kontrollspeicherzelle (KZ2; KZ1) des zuvor beschriebenen Speicherbereichs (Z2; Z1) programmiert, so daß dieser als der gültige Speicherbereich erkannt werden kann.

2. Integrierte Schaltungsanordnung mit einem Speicher mit zumindest zwei nicht-flüchtigen Speicherbereichen (Z1, Z2) zum Speichern jeweils gültiger Werte, wobei jedem Speicherbereich (Z1, Z2) zumindest eine nicht-flüchtige Kontrollspeicherzelle (KZ1, KZ2) zugeordnet ist, durch deren Zustand der jeweils gültige Speicherbereich (Z1; Z2) definiert ist,
**dadurch gekennzeichnet**,
daß Steuergateanschlüsse der Speichertransistoren (ST1, ST2) der Kontrollspeicherzellen (KZ1, KZ2) mit Steuergateanschlüssen (SG1, SG2) der jeweils zugehörigen Speicherbereich-Speichertransistoren verbunden sind,
daß Drainanschlüsse der Kontrollspeicherzellen-Speichertransistoren (ST1, ST2) über erste Auswahltransistoren (AT11, AT21) mit einer Bitleitung verbunden sind,
daß Sourceanschlüsse der Kontrollspeicherzellen-Speichertransistoren (ST1, ST2) über zweite Auswahltransistoren (AT12, AT22) mit Masse verbunden sind,
daß Gateanschlüsse der zweiten Auswahltransistoren (AT12; AT22) mit dem Steuergateanschluß des Speichertransistors (ST1; ST2) derselben Kontrollspeicherzelle (ST1, ST2) verbunden sind,
daß Gateanschlüsse der ersten Auswahltransistoren (AT11, AT21) mit dem Steuergateanschluß des Speichertransistors (ST2; ST1) der jeweils anderen Kontrollspeicherzelle verbunden sind.

## Claims

1. Method for reliably changing the value of a data medium having at least two nonvolatile memory areas (Z1, Z2) for storing the currently valid value, each memory area (Z1, Z2) having at least one associated nonvolatile control memory cell (KZ1, KZ2) whose state defines the currently valid memory area (Z1; Z2), **characterized by** the following steps:
• the current value is written to the invalid memory area (Z2; Z1),
• the previously valid memory area (Z1; Z2) and the associated control memory cell (KZ1; KZ2) are erased simultaneously and the control memory cell (KZ2; KZ1) for the memory area (Z2; Z1) to which information has previously been written is programmed, likewise simultaneously, so that the latter memory area can be recognized as the valid memory area.

2. Integrated circuit arrangement having a memory with at least two nonvolatile memory areas (Z1, Z2) for storing currently valid values, each memory area (Z1, Z2) having at least one associated nonvolatile control memory cell (KZ1, KZ2) whose state defines the currently valid memory area (Z1; Z2),
characterized
in that control gate connections of the memory transistors (ST1, ST2) in the control memory cells (KZ1, KZ2) are connected to control gate connections (SG1, SG2) of the particular associated memory area memory transistors,
in that drain connections of the control memory cell memory transistors (ST1, ST2) are connected to a bit line via first selection transistors (AT11, AT21),
in that source connections of the control memory cell memory transistors (ST1, ST2) are connected to earth via second selection transistors (AT12, AT22),
in that gate connections of the second selection transistors (AT12; AT22) are connected to the control gate connection of the memory transistor (ST1; ST2) in the same control memory cell (ST1, ST2), and
in that gate connections of the first selection transistors (AT11, AT21) are connected to the control gate connection of the memory transistor (ST2; ST1) in the other control memory cell in each case.

## Revendications

1. Procédé pour la modification sécurisée de la valeur d'un support de données comportant au moins deux zones de mémoire non volatiles (Z1, Z2) pour mémoriser la valeur respectivement valide, dans lequel il est associé à chaque zone de mémoire (Z1, Z2) au moins une cellule de mémoire de contrôle non volatile (KZ1, KZ2) dont l'état définit la zone de mémoire respectivement valide (Z1 ; Z2), **caractérisé par** les étapes suivantes :
• on écrit la valeur actuelle dans la zone de mémoire non volatile (Z2 ; Z1),
• on efface en même temps la zone de mémoire valide antérieurement (Z1 ; Z2) et la cellule de mémoire de contrôle associée (KZ1 ; KZ2) et on programme également en même temps la cellule de mémoire de contrôle (KZ2 ; KZ1) de la zone de mémoire dans laquelle on vient d'écrire (Z2 ; Z1) de telle sorte que celle-ci peut être détectée comme étant la zone de mémoire valide.

2. Circuit intégré comportant une mémoire avec au moins deux zones de mémoire non volatiles (Z1, Z2) pour mémoriser des valeurs respectivement valides, dans lequel il est associé à chaque zone de mémoire (Z1, Z2) au moins une cellule de mémoire de contrôle non volatile (KZ1, KZ2) dont l'état définit la zone de mémoire respectivement valide (Z1 ; Z2),
**caractérisé par** le fait que
des bornes de grilles de commande des transistors de mémoire (ST1, ST2) des cellules de mémoire de contrôle (KZ1, KZ2) sont reliées à des bornes de grilles de commande (SG1, SG2) des transistors de mémoire de zones de mémoire respectivement associés,
des bornes de drain des transistors de mémoire de cellules de mémoire de contrôle (ST1, ST2) sont reliées à une ligne de bit par l'intermédiaire de premiers transistors de sélection (AT11, AT21),
des homes de source des transistors de mémoire de cellules de mémoire de contrôle (ST1, ST2) sont reliées à la masse par l'intermédiaire de deuxièmes transistors de sélection (AT12, AT22),
des homes de grilles des deuxièmes transistors de sélection (AT12 ; AT22) sont reliées à la borne de grille de commande du transistor de mémoire (ST1 ; ST2) de la même cellule de mémoire de contrôle (ST1, ST2),
et des bornes de grilles des premiers transistors de sélection (AT11, AT21) sont reliées à la borne de grille de commande du transistor de mémoire (ST2 ; ST1) de l'autre cellule de mémoire de contrôle respective.
